# EUROPÄISCHE PATENTSCHRIFT

(11) **EP 1 055 141 B1**
(45) Veröffentlichungstag und Bekanntmachung des Hinweises auf die Patenterteilung: **19.03.2003**
(21) Anmeldenummer: 98966556.7
(22) Anmeldetag: 17.12.1998
(51) Int. Cl.: G02B 6/12

(54) **OPTISCHE STRUKTUR UND VERFAHREN ZU DEREN HERSTELLUNG**
OPTICAL STRUCTURE AND PROCESS FOR MANUFACTURING THE SAME
STRUCTURE OPTIQUE ET SON PROCEDE DE FABRICATION

(30) Priorität: 10.02.1998 DE 19805281
(43) Veröffentlichungstag der Anmeldung: 29.11.2000
(73) Patentinhaber: Infineon Technologies AG, 81669 München (DE)
(72) Erfinder: GRÜNING, Ulrike, Wappingers Falls, NY 12590 (US); LEHMANN, Volker, D-80689 München (DE); STENGL, Reinhard, D-86391 Stadtbergen (DE); WENDT, Hermann, D-85630 Grasbrunn (DE); REISINGER, Hans, D-82031 Grünwald (DE)
(74) Vertreter: Müller - Hoffmann & Partner
(86) Internationale Anmeldenummer: DE9803718
(87) Internationale Veröffentlichungsnummer: WO99041626

(56) Entgegenhaltungen:
- DE-A- 19 526 734
- DE-A- 19 634 893
- US-A- 5 389 943
- YU L S ET AL: "DIRECT MEASUREMENT OF THE REFRACTIVE INDEX CHANGE OF SILICON WITH OPTICALLY INJECTED CARRIERS" APPLIED PHYSICS LETTERS, Bd. 68, Nr. 11, 11. März 1996, Seiten 1546-1548, XP000582331 in der Anmeldung erwähnt
- TREYZ G V ET AL: "SILICON MACH-ZEHNDER WAVEGUIDE INTERFEROMETERS BASED ON THE PLASMA DISPERSION EFFECT" APPLIED PHYSICS LETTERS, Bd. 59, Nr. 7, 12. August 1991, Seiten 771-773, XP000233752 in der Anmeldung erwähnt

## Beschreibung

Die Erfindung betrifft eine optische Struktur, die zur Modulation oder zum Schalten von Licht geeignet ist; sowie ein Verfahren zu deren Herstellung.

Für verschiedene Anwendungen, zum Beispiel für die optische Datenübertragung, werden optoelektronische Bauelemente mit integrierten Schaltungen monolithisch integriert. Als Schalter oder Modulator für Licht werden dabei optische Strukturen auf Halbleiterbasis benötigt.

Aus G. V. Treyz et al, Appl. Phys. Lett., Bd. 59, 1991, Seite 771 ff und L. S. Yu et al, Appl. Phys. Lett., Bd. 68, 1996, Seite 1546 ff ist bekannt, zur Modulation von Licht die Dispersion durch freie Ladungsträger auszunutzen. Dabei wird eine mesaförmige Struktur in einem Siliziumsubstrat als Wellenleiter verwendet. Die Lichtführung in dem Wellenleiter erfolgt durch Totalreflexion. Über eine pin-Diode, die in Durchlaßrichtung gepolt ist, werden freie Ladungsträger injiziert, die durch Dispersion in den Bereich des Wellenleiters gelangen. Diese freien Ladungsträger verändern den Brechungsindex im Wellenleiter und beeinflussen dadurch die Totalreflexion. Auf diese Weise wird der Wellenleiter verstimmt. Wegen der geringen Verstimmungsmöglichkeit der Wellenleiter ist zur Beeinflussung der Lichtintensität eine relativ lange Wegstrecke des Wellenleiters erforderlich.

Der Erfindung liegt die Aufgabe zugrunde, eine optische Struktur anzugeben, mit der eine Modulation von Licht möglich ist und die kompakter als die bekannten Strukturen realisierbar ist. Darüber hinaus soll ein Verfahren zur Herstellung einer derartigen optischen Struktur angegeben werden.

Diese Aufgabe wird gelöst durch eine optische Struktur gemäß Anspruch 1 sowie ein Verfahren zu deren Herstellung gemäß Anspruch 7. Weitere Ausgestaltungen der Erfindung gehen aus den übrigen Ansprüchen hervor.

In der erfindungsgemäßen optischen Struktur ist in einem Träger eine Gitterstruktur vorgesehen. Der Träger weist mindestens im Bereich der Gitterstruktur Halbleitermaterial auf. Er ist insbesondere aus einem III-V- Halbleiter oder aus Silizium realisiert.

Die Gitterstruktur weist eine photonische Bandlücke auf, das heißt, sie hat die Eigenschaft, daß es mindestens ein Frequenzband gibt, so daß sich Licht mit einer Frequenz aus diesem Frequenzband in der Gitterstruktur nicht ausbreiten kann. Die Gitterstruktur stellt ein dielektrisches Gitter dar, an dem dieses Licht braggreflektiert wird.

Die Gitterstruktur ist durch eine Anordnung von Poren mit im wesentlichen gleichem Querschnitt gebildet. Der Querschnitt der Poren ist vorzugsweise rund. Er kann auch eckig, zum Beispiel quadratisch, sein. Außerhalb eines Defektbereichs in der Gitterstruktur sind die Poren in einem periodischen Raster angeordnet. In dem Defektbereich ist das periodische Raster dagegen gestört. Die Störung kann in einem veränderten Gitterabstand zwischen mindestens zwei Poren, im Fehlen mindestens einer Pore oder in mindestens einer Pore, die mit einem anderen Material gefüllt ist oder einen anderen Durchmesser aufweist, bestehen.

Vorzugsweise verlaufen die Poren im wesentlichen senkrecht zu einer Hauptfläche des Trägers. Dadurch ist die optische Struktur besonders einfach herstellbar.

Die Oberfläche der Gitterstruktur ist mindestens im Bereich des Defektbereichs mit einer leitfähigen Schicht versehen. Die Oberfläche der Gitterstruktur umfaßt dabei auch die gesamte Oberfläche der Poren. Die leitfähige Schicht kleidet diese gegebenenfalls aus.

Eine optische Struktur, die einen Träger mit einer Gitterstruktur mit einer photonischen Bandlücke und einen Defektbereich aufweist, wurde bereits in DE 195 26 734 A1 vorgeschlagen. Das Problem der Modulation oder des Schaltens von Licht wird in DE 195 26 734 A1 jedoch nicht angesprochen.

In der optischen Struktur wird Licht aus dem Frequenzband, das der photonischen Bandlücke entspricht, in dem Defektbereich dadurch geführt, daß es sich aufgrund seiner Wellenlänge nicht in die Gitterstruktur ausbreiten kann. Der Defektbereich stellt somit ein sehr schmalbandiges Filter dar. Die Transmission durch den Defektbereich kann dadurch verändert werden, daß Brechungsindex und/oder Absorption innerhalb des Defektbereichs verändert werden. Eine solche Brechungsindexänderung läßt sich durch eine Änderung der freien Ladungsträgerkonzentration im Defektbereich erzielen. Eine derartige Änderung ist sowohl dadurch zu erzielen, daß der Defektbereich mit Licht, dessen Energie oberhalb der Bandkante des Halbleitermaterials liegt, bestrahlt wird. Vorzugsweise wird die Brechungsindexänderung dadurch erzielt, daß über die leitfähige Schicht Ladungsträger in den Defektbereich injiziert werden. Die leitfähige Schicht macht ermöglicht somit ein einfaches Modulieren oder Schalten des Lichts.

Vorzugsweise wird die leitfähige Schicht durch ein dotiertes Gebiet realisiert, das sich durch den Leitfähigkeitstyp und/oder die Dotierstoffkonzentration von dem Träger unterscheidet. In diesem Fall ist der Träger dotiert. Unterscheidet sich das dotierte Gebiet von dem Träger durch den Leitfähigkeitstyp, so wird der dabei gebildete pn-Übergang in Sperrichtung gepolt, um eine Raumladungszone, die an Ladungstragern verarmt ist, zu bilden. Dadurch wird bewirkt, daß Licht ungehindert passieren kann. Wird der pn-Ubergang in Durchlaßrichtung gepolt, so wird der Defektbereich mit Ladungsträgern überschwemmt. Dadurch ändern sich Absorption und Brechungsindex und der Lichtfluß wird unterbrochen.

Alternativ wird die leitfähige Schicht als auf der Oberfläche befindliche Schicht aus leitfähigem Material realisiert, die für das Licht transparent ist. Für die leitfähige Schicht ist insbesondere dotiertes Polysilizium, Metall oder Metallsilizid geeignet. Die Dicke der Schicht wird so bemessen, daß sie für das Licht transparent ist.

Zur Verwendung des Defektbereichs als Modulator oder Schalter liegt es im Rahmen der Erfindung, den Defektbereich zwischen Lichtleitern anzuordnen. Als Lichtleiter werden ebenfalls Defektbereiche verwendet, deren geometrische Form streifenförmig ist. Zwischen den Lichtleitern ist der Defektbereich, der als Schalter wirkt, angeordnet. Alternativ kann der Defektbereich aufgrund seiner geometrischen Form als Lichtleiter ausgebildet sein, der durch Änderung der Ladungsträgerkonzentration in seiner Transmission veränderbar ist.

Über die Form des periodischen Rasters lassen sich weitere Eigenschaften der optischen Struktur einstellen. Ist das periodische Raster quadratisch, so ist die optische Struktur für polarisiertes Licht geeignet. In diesem Fall kommt es zur Ausbildung von photonischen Bandlücken für die beiden Polarisationsrichtungen des Lichtes, die sich nicht überlappen. Ist. das Raster dagegen trigonal, so überlappen die photonischen Bandlücken für beide Polarisationsrichtungen des Lichtes und die optische Struktur ist für unpolarisiertes Licht geeignet.

Die optische Struktur kann sowohl als Einzelbauelement als auch in einer integrierten Schaltung realisiert werden.

Die optische Struktur kann durch anisotropes Ätzen in einem Substrat gebildet werden.

Vorzugsweise wird die optische Struktur auf der Basis von n-dotiertem Silizium durch elektrochemisches Ätzen hergestellt. Dabei werden zunächst in einer Hauptfläche eines n-dotierten Siliziumsubstrats in einem periodischen Raster angeordnete Vertiefungen erzeugt. Das Raster weist dabei einen Defektbereich auf, in dem mindestens eine Vertiefung fehlt oder der Abstand zwischen benachbarten Vertiefungen verändert ist. Die elektrochemische Ätzung wird in einem Elektrolyten durchgeführt, der vorzugsweise fluoridhaltig und sauer ist und mit dem die Hauptfläche in Kontakt steht. Zwischen den Elektrolyten und das Siliziumsubstrat wird eine Spannung angelegt, so daß das Siliziumsubstrat als Anode verschaltet ist. Dadurch bewegen sich Minoritätsladungsträger in dem n-dotierten Silizium zu der mit dem Elektrolyten in Kontakt stehenden Hauptfläche. An dieser Hauptfläche bildet sich eine Raumladungszone aus. Da die Feldstärke im Bereich von Vertiefungen in der Hauptfläche größer ist als außerhalb davon, bewegen sich die Minoritätsladungsträger bevorzugt zu diesen Punkten. Dadurch kommt es zu einer selbstjustierten Strukturierung der Oberfläche. Je tiefer eine anfänglich kleine Vertiefung durch die Ätzung wird, desto mehr Minoritätsladungsträger bewegen sich wegen der vergrößerten Feldstärke dorthin und desto stärker ist der Ätzangriff an dieser Stelle. Die Poren wachsen mit zunehmender Ätzzeit. An der Oberfläche der Poren wird nachfolgend eine leitfähige Schicht erzeugt, die mindestens den Defektbereich überdeckt. Die leitfähige Schicht kann durch Diffusion in Form eines dotierten Gebietes oder durch CVD-Abscheidung einer dünnen, leitfähigen Schicht gebildet werden.

Im folgenden wird die Erfindung anhand eines Ausführungsbeispiels und der Figuren näher erläutert.
- Figur 1: zeigt eine Aufsicht auf eine optische Struktur mit einem Defektbereich, der zwischen zwei Lichtleitern angeordnet ist.
- Figur 2: zeigt den in Figur 1 mit II-II bezeichneten Schnitt durch die optische Struktur.

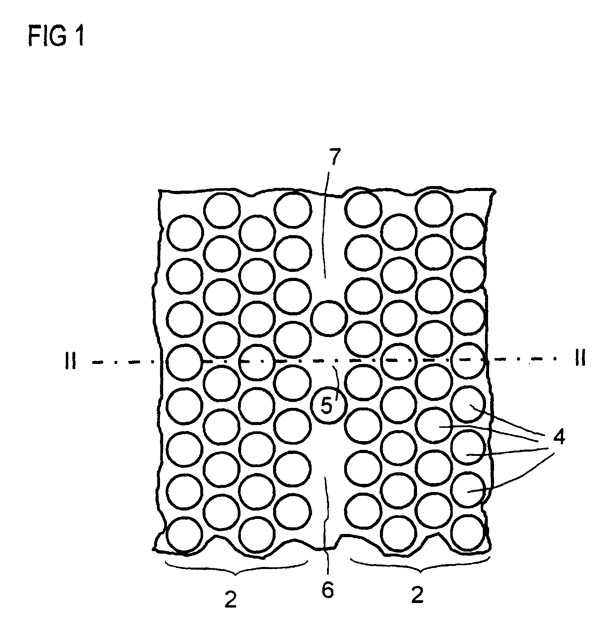

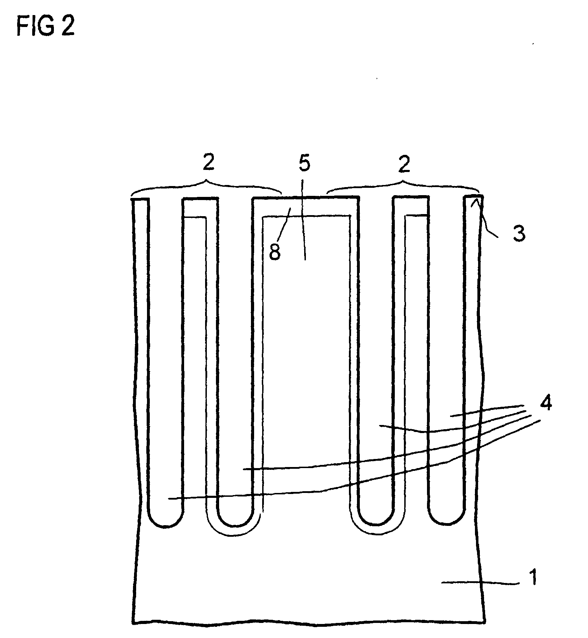

Ein Träger 1 aus n-dotiertem, monokristallinem Silizium umfaßt eine Gitterstruktur 2 (siehe Figur 1 und Figur 2). Die Gitterstruktur 2 wird durch eine periodische Anordnung von im wesentlichen senkrecht zu einer Hauptfläche 3 des Trägers 1 verlaufenden Poren 4 mit im wesentlichen rundem Querschnitt gebildet. In der Gitterstruktur 2 gibt es einen Defektbereich 5, einen ersten Lichtleiter 6 und einen zweiten Lichtleiter 7. Im Bereich des Defektbereichs 5, des ersten Lichtleiters 6 und des zweiten Lichtleiters 7 ist das periodische Raster dadurch gestört, daß in diesem Bereich keine Poren 4 angeordnet sind. In dem Defektbereich 5 fehlt zum Beispiel eine Pore 4. Der erste Lichtleiter 6 und der zweite Lichtleiter 7 weisen in der Breite jeweils die Ausdehnung von einer Pore 4 auf. Zwischen dem ersten Lichtleiter 6 und dem Defektbereich 5 bzw. dem zweiten Lichtleiter 7 und dem Defektbereich 5 ist jeweils mindestens eine Pore 4 angeordnet.

Die Poren 4 sind in einem trigonalen Raster angeordnet. Über den Abstand benachbarter Poren 4 wird dabei der Wellenlängenbereich des Lichtes eingestellt, für das im Defektbereich 5, im ersten Lichtleiter 6 und im zweiten Lichtleiter 7 eine Wellenführung auftritt. Für den Abstand a der Mittelpunkte benachbarter Poren und die Wellenlänge λ gilt dabei allgemein die Beziehung a/λ ≈ 0,2 bis 0,5. Durch entsprechende Anordnung der Poren im Raster ist die Wellenlänge des geführten Lichtes über den gesamten Wellenlängenbereich verschiebbar, in dem das Material des Trägers 1 nicht absorbiert. Besteht der Träger 1 wie in diesem Ausführungsbeispiel aus Silizium, so kann eine Wellenführung im Wellenlängenbereich zwischen 1,1 µm und 100 µm sicher eingestellt werden. Zur Wellenführung im Wellenlängenbereich zwischen 5 und 6 µm beträgt der Abstand a benachbarter Poren 4 1,5 µm bis 2,5 µm. Die Poren 4 weisen einen Durchmesser von 1,3 µm bis 2,2 µm auf. Die Tiefe der Poren 4 beträgt 5 µm bis 200 µm.

Es ist ein dotiertes Gebiet 8 vorgesehen, das mindestens die Oberfläche des Defektbereichs 5 bedeckt. Das dotierte Gebiet 8 ist p-dotiert mit einer Dotierstoffkonzentration von 10¹⁹ cm⁻³ und weist eine Tiefe von 200 bis 500 nm auf. Das dotierte Gebiet 8 wirkt als leitfähige Schicht und bildet mit dem Träger 1 einen pn-Übergang. Für eine Wellenführung bei einer Wellenlänge von 1,5 µm werden alle Abmessungen um einen Faktor 3 reduziert.

Im Betrieb der optischen Struktur wird der pn-Übergang in Sperrichtung gepolt. Dazu wird das dotierte Gebiet 8 über einen Kontakt (nicht dargestellt) mit einem Potential von - 2 Volt beaufschlagt. Der Träger 1 wird über einen weiteren Kontakt (nicht dargestellt) mit Erdpotential verbunden. Dadurch bildet sich im Gebiet des Defektbereiches 5 eine Raumladungszone aus, die von Ladungsträgern verarmt ist. Dadurch ist der Defektbereich 5 für Licht, das über den ersten Lichtleiter 6 und den zweiten Lichtleiter 7 geführt wird, durchlässig.

Wird das dotierte Gebiet 8 mit einer Spannung von + 2 Volt beaufschlagt, während der Träger 1 weiterhin mit Erdpotential verbunden ist, so ist der pn-Übergang in Durchlaßrichtung gepolt. Dadurch wird der Defektbereich 5 mit freien Ladungsträgern überschwemmt. Diese freien Ladungsträger bewirken eine Brechungsindexänderung, die die Transmissionseigenschaften des Defektbereichs 5 so verändern, daß in dem ersten Lichtleiter 6 und dem zweiten Lichtleiter 7 geführtes Licht nicht mehr durch den Defektbereich 5 transmittiert wird. Der Lichtfluß wird unterbrochen.

Zur Herstellung der optischen Struktur werden in der Hauptfläche 3 des Trägers 1, der einen spezifischen Widerstand von zum Beispiel 1 Ohm cm aufweist, Vertiefungen erzeugt, die entsprechend den Poren 4 in einem periodischen Raster angeordnet sind. Im Bereich des Defektbereichs 5, des ersten Lichtleiters 6 und des zweiten Lichtleiters 7 werden keine Vertiefungen erzeugt. Die Vertiefungen werden zum Beispiel nach Herstellung einer Photolackmaske mit Hilfe konventioneller Photolithographie und anschließender alkalischer Ätzung hergestellt. Nach Entfernung der Photolackmaske wird die Hauptfläche 3 des Trägers 1 mit einem fluoridhaltigen, sauren Elektrolyten in Kontakt gebracht. Der Elektrolyt weist eine Flußsäurekonzentration von 1 bis 50 Gewichtsprozent, vorzugsweise 3 Gewichtsprozent auf. Dem Elektrolyten kann ein Oxidationsmittel, zum Beispiel Wasserstoffsuperoxid, zugesetzt werden, um die Entwicklung von Wasserstoffbläschen auf der Hauptfläche 3 des Trägers 1 zu unterdrücken.

Der Träger 1 wird als Anode verschaltet. Zwischen dem Träger 1 und dem Elektrolyten wird eine Spannung von 0 bis 20 Volt, vorzugsweise 3 Volt, angelegt. Der Träger 1 wird von einer der Hauptfläche 3 gegenüberliegenden Rückseite 4 mit Licht beleuchtet, so daß eine Stromdichte von zum Beispiel 14 mA pro cm² eingestellt wird. Ausgehend von den Vertiefungen werden bei der elektrochemischen Ätzung die Poren 4 erzeugt, die im wesentlichen senkrecht zur Hauptfläche 3 verlaufen. Nach einer Ätzzeit von 5 Minuten weisen die Poren 4 eine Abmessung senkrecht zur Hauptfläche 3 von 5 µm auf. Der Durchmesser der Poren 4 beträgt etwa 2 µm.

Nach Beendigung der elektrochemischen Ätzung wird durch eine Diffusion mit Bor das dotierte Gebiet 8 mit einer Dotierstoffkonzentration von 10¹⁹ cm⁻³ gebildet. Schließlich werden Kontakte (nicht dargestellt) zu dem dotierten Gebiet 8 und dem Träger 1 durch Aufdampfen und Strukturieren von Metall erzeugt.

Beim Betrieb der optischen Struktur kann der Defektbereich 5 alternativ zur Polung in Durchlaßrichtung auch durch Einstrahlen von Licht mit einer Wellenlänge von zum Beispiel 632,8 nm mit freien Ladungsträgern überschwemmt werden.

## Patentansprüche

1. Optische Struktur zur Modulation von Licht,
- bei der in einem Träger (1) eine Gitterstruktur (2) vorgesehen ist,
- bei der der Träger (1) mindestens im Bereich der Gitterstruktur (2) Halbleitermaterial aufweist,
- bei der die Gitterstruktur (2) die Eigenschaft hat, daß es mindestens ein Frequenzband gibt, so daß sich Licht mit einer Frequenz aus dem Frequenzband in der Gitterstruktur (2) nicht ausbreiten kann,
- bei der die Gitterstruktur (2) eine Anordnung von Poren (4) mit einem Defektbereich (5) aufweist, wobei die Poren (4) außerhalb des Defektbereichs (5) in einem periodischen Raster angeordnet sind und das periodische Raster in dem Defektbereich (5) gestört ist,
- bei der die Oberfläche der Gitterstruktur (2) mindestens im Bereich des Defektbereichs (5) mit einer leitfähigen Schicht (8) versehen ist,
- so dass durch eine Änderung der Ladungsträgerkonzentration im Defektbereich die Transmission der Gitterstruktur veränderbar ist.

2. Optische Struktur nach Anspruch 1,
- bei der der Träger (1) dotiert ist,
- bei der die leitfähige Schicht (8) durch ein dotiertes Gebiet realisiert ist, das sich durch den Leitfähigkeitstyp und/oder die Dotierstoffkonzentration von der Dotierung des Trägers (1) unterscheidet.

3. Optische Struktur nach Arspruch 1 oder 2, bei dem die Poren (4) im wesentlichen senkrecht zu einer Hauptfläche (3) des Trägers (1) verlaufen.

4. Optische Struktur nach einem der Ansprüche 1 bis 3,
- bei der der Träger (1) monokristallines Silizium enthält,
- bei der die Poren (4) durch elektrochemisches Ätzen gebildet sind.

5. Optische Struktur nach Anspruch 4,
- bei der der Abstand benachbarter Poren (4) in dem periodischen Raster im Bereich zwischen 0,5 und 25 µm liegt,
- bei der der Durchmesser der Poren (4) im Bereich zwischen 0,4 µm und 23 µm liegt.

6. Optische Struktur nach einem der Ansprüche 1 bis 5, bei der das periodische Raster trigonal ist.

7. Verfahren zur Herstellung einer optischen Struktur zur Modulation von Licht,
- bei dem in einer Hauptfläche (3) eines n-dotierten Siliziumsubstrates (1) in einem periodischen Raster angeordnete Vertiefungen erzeugt werden, wobei das Raster einen Defektbereich (5) aufweist, in dem das periodische Raster gestört ist,
- bei dem durch eine elektrochemische Ätzung in einem Elektrolyten, mit dem Hauptfläche (3) in Kontakt steht, gegenüber dem das Siliziumsubstrat (1) als Anode verschaltet ist und in dem eine den Ätzabtrag beeinflussende Stromdichte eingestellt ist, in dem Siliziumsubstrat (1) ausgehend von den Vertiefungen Poren (4) geätzt werden,
- bei dem die Oberfläche der Gitterstruktur (2) mindestens im Bereich des Defektbereichs (5) mit einer leitfähigen. Schicht (8) versehen wird,
- so dass durch eine Anderung der Ladungsträgerkonzentration im Defektbereich die Transmission der Gitterstruktur veränderbar ist.

8. Verfahren nach Anspruch 7,
bei dem die Stromdichte durch Beleuchtung einer der Hauptfläche (3) gegenüberliegenden Rückseite des Siliziumsubstrats (1) eingestellt wird.

9. Verfahren nach Anspruch 7 oder 8,
- bei dem das Siliziumsubstrat (1) eine <100>-Scheibe ist,
- bei dem das elektrochemische Ätzen in einem fluoridhaltigen sauren Elektrolyten erfolgt.

10. Verfahren nach einem der Ansprüche 7 bis 9,
bei dem die leitfähige Schicht als dotiertes Gebiet (8) gebildet wird, das sich durch den Leitfähigkeitstyp und/oder die Dotierstoffkonzentration von der Dotierung des Siliziumsubstrats (1) unterscheidet.

## Claims

1. Optical structure for modulating light,
- in the case of which a grating structure (2) is provided in a substrate (1),
- in the case of which the substrate (1) has semiconductor material at least in the region of the grating structure (2),
- in the case of which the grating structure (2) has the property that it emits at least one frequency band so that light having a frequency from the frequency band cannot propagate in the grating structure (2),
- in the case of which the grating structure (2) has an arrangement of pores (4) having a defective region (5), the pores (4) being arranged outside the defective region (5) in a periodic array, and the periodic array being disturbed in the defective region (5), and
- in the case of which the surface of the grating structure (2) is provided with a conductive layer (8) at least in the region of the defective region (5), so that the transmission of the grating structure can be varied by changing the charge carrier concentration in the defective region.

2. Optical structure according to Claim 1,
- in the case of which the substrate (1) is doped, and
- in the case of which the conductive layer (8) is implemented by a doped zone which differs from the doping of the substrate (1) in the conductivity type and/or the doping concentration.

3. Optical structure according to Claim 1 or 2, in the case of which the pores (4) run essentially perpendicular to a main surface (3) of the substrate (1).

4. Optical structure according to one of Claims 1 to 3,
- in the case of which the substrate (1) contains monocrystalline silicon, and
- in the case of which the pores (4) are formed by electrochemical etching.

5. Optical structure according to Claim 4,
- in the case of which the spacing between neighbouring pores (4) in the periodic array is in the region of between 0.5 and 25 µm, and
- in the case of which the diameter of the pores (4) is in the region of between 0.4 µm and 23 µm.

6. Optical structure according to one of Claims 1 to 5, in the case of which the periodic array is trigonal.

7. Method for producing an optical structure for modulating light,
- in the case of which depressions arranged in a periodic array are produced in a main surface (3) of an n-doped silicon substrate (1), the array having a defective region (5) in which the periodic array is disturbed,
- in the case of which pores (4) are etched in the silicon substrate (1) starting from the depressions by means of electrochemical etching in an electrolyte which is in contact with [lacuna] main surface (3), with respect to which the silicon substrate (1) is connected as anode, and in which a current density is set which influences the etching erosion, and
- in the case of which the surface of the grating structure (2) is provided with a conductive layer (8) at least in the region of the defective region (5),
- so that the transmission of the grating structure can be varied by changing the charge carrier concentration in the defective region.

8. Method according to Claim 7, in the case of which the current density is set by illuminating a rear side of the silicon substrate (1) which is opposite the main surface (3).

9. Method according to Claim 7 or 8,
- in the case of which the silicon substrate (1) is a <100> wafer, and
- in the case of which the electrochemical etching is performed in a fluoride-containing acid electrolyte.

10. Method according to one of Claims 7 to 9, in the case of which the conductive layer is formed as a doped zone (8) which differs from the doping of the silicon substrate (1) in the conductivity type and/or the doping concentration.

## Revendications

1. Structure optique de modulation de la lumière,
- dans laquelle il est prévu une structure (2) de réseau dans un support (1),
- daps laquelle le support (1) comprend du matériau semiconducteur au moins dans la partie de la structure (2) de réseau,
- dans laquelle la structure (2) de réseau a la propriété qu'il y a au moins une bande de fréquence, de sorte que de la lumière ayant une fréquence hors de la bande de fréquence ne peut pas se propager dans la structure (2) de réseau,
- dans laquelle la structure (2) de réseau a un agencement de pores (4) ayant une région (5) de défaut, les pores (4) étant disposés à l'extérieur de la région (5) de défaut suivant une trame périodique et la trame périodique étant perturbée dans la région (5) de défaut,
- dans laquelle la surface de la structure (2) de réseau est munie au moins dans la partie de la région (5) de défaut d'une couche (8) conductrice,
- de sorte que la transmission de la structure de réseau peut être modifiée par une modification de la concentration des porteurs de charge dans la zone de défaut.

2. Structure optique suivant la revendication 1,
- dans laquelle le support (1) est dopé,
- dans laquelle la couche (8) conductrice est réalisée par une zone dopée qui se distingue du dopage du support (1) par le type de conductivité et/ou par la concentration de la substance de dopage.

3. Structure optique suivant la revendication 1 ou 2, dans laquelle les pores s'étendent sensiblement perpendiculairement à une surface (3) principale du support (1).

4. Structure optique suivant l'une des revendications 1 à 3,
- dans laquelle le support (1) contient du silicium monocristallin,
- dans laquelle les pores sont formés par une attaque électrochimique.

5. Structure optique suivant la revendication 4,
- daps laquelle la distance entre des pores (4) voisins dans la trame périodique est comprise entre 0,5 et 25 µm environ,
- dans laquelle le diamètre des pores est compris entre 0,4 µm et 23 µm environ.

6. Structure optique suivant l'une des revendications 1 à 5, dans laquelle la trame périodique est triangulaire.

7. Procédé de fabrication d'une structure optique de modulation de la lumière,
- dans lequei on produit, dans une surface (3) principale d'un substrat (1) en silicium à dopage n, des cavités disposées suivant une trame périodique, la trame ayant une région (5) de défaut dans laquelle la trame périodique est perturbée,
- dans lequel on ménage des pores (4) dans le substrat (1) de silicium à partir des cavités par une attaque électrochimique dans un électrolyte avec lequel la surface (3) principale est en contact, vis-à-vis duquel le substrat (1) en silicium est monté en anode et dans lequel est établie une densité de courant influençant l'enlèvement de matière par attaque,
- dans lequel on munit la surface de la structure (2) de réseau, au moins dans la partie de la région (5) de défaut, d'une couche (8) conductrice,
- de sorte que la transmission de la stnrcture de réseau peut être modifiée par une modification de la concentration des porteurs de charge dans la région de défaut.

8. Procédé suivant la revendication 7,
- dans lequel on règle la densité de courant en éclairant une face arrière opposée à la surface (3) principale du substrat (1) en silicium.

9. Procédé suivant la revendication 7 ou 8,
- dans lequel le substrat (1) en silicium est une tranche <100>,
- dans lequel on effectue l'attaque électrochimique dans un électrolyte acide contenant du fluorure.

10. Procédé suivant l'une des revendications 7 à 9, dans lequel on forme la couche conductrice sous la forme d'une zone (8) dopée qui se distingue par le type de conductivité et/ou par la concentration de la substance de dopage du dopage du substrat (1) en silicium.
